# EUROPÄISCHE PATENTANMELDUNG

(11) **EP 2 940 313 A2**
(43) Veröffentlichungstag der Anmeldung: **04.11.2015**
(21) Anmeldenummer: 15165146.0
(22) Anmeldetag: 27.04.2015
(51) Int. Cl.: F04D 29/28, F04D 29/30

(54) **HOHLPROFILSCHAUFEL UND RADIALLÜFTERRAD**

(30) Priorität: 28.04.2014 DE 102014207903
(71) Anmelder: ebm-papst Mulfingen GmbH & Co. KG, 74673 Mulfingen (DE)
(72) Erfinder: Baer, Martin, 74673 Mulfingen (DE); Gebert, Daniel, 74613 Öhringen (DE); Strehle, Michael, 74653 Ingelfingen (DE)
(74) Vertreter: Jostarndt, Hans-Dieter

(57) **Zusammenfassung**

Die Erfindung betrifft die Schaufel eines Lüfterrades. Insbesondere betrifft die Erfindung eine Hohlprofilschaufel für ein Lüfterrad. Eine erfindungsgemäße Hohlprofilschaufel für ein Lüfterrad ist aus einem flächigen Halbzeug hergestellt und weist eine Vorderkante und eine Hinterkante sowie eine Druckseite und eine Saugseite auf. Im Inneren der Hohlprofilschaufel ist ein hohler Bereich ausgebildet, wobei das die eine Seite der Hohlprofilschaufel bildende Teil des flächigen Halbzeugs der Hohlprofilschaufel über das die andere Seite der Hohlprofilschaufel bildende Teil des flächigen Halbzeugs hinausragt.

## Beschreibung

Die Erfindung betrifft die Schaufel eines Lüfterrades. Insbesondere betrifft die Erfindung Kante einer Hohlprofilschaufel für ein Lüfterrad.

Lüfterräder dienen in Radial- oder Axialventilatoren zur Förderung und/oder Verdichtung von gasförmigen Medien, insbesondere von Luft. Dabei sind in einem Lüfterrad mehrere Schaufeln angeordnet, wobei zwischen den Schaufeln die Strömungskanäle ausgebildet sind. Jede Schaufel weist eine Druck- und eine Saugseite auf. Im Stand der Technik ist es bekannt, Schaufeln für Lüfterräder aus metallischen Werkstoffen in Blechform als Hohlprofilschaufeln herzustellen. Der Vorteil einer solchen Bauform besteht in der Möglichkeit, eine Schaufel aus einem Halbzeug herzustellen, wodurch die Herstellung wirtschaftliche Vorteile aufweist. Die Hohlprofilform hat darüber hinaus Vorteile hinsichtlich des Gewichts der Schaufel, wodurch der Antriebsmotor des Lüfters entlastet wird. Weiterhin wird über diese Bauform Material eingespart, wodurch Kosten eingespart werden können.

Beispielsweise offenbart die deutsche Offenlegungsschrift DE 10 2011 013 841 A1 eine solche Hohlprofilschaufel aus einem metallischen Werkstoff. Jede Hohlprofilschaufel ist aus einem Halbzeug hergestellt, wobei die Schaufel einen tragflächenartigen Querschnitt aufweist. Insbesondere weist die Schaufel eine Vorderkante und eine Hinterkante auf, wobei die Vorderkante von dem umgebogenen Halbzeug gebildet wird. An der Hinterkante treffen die beiden Enden des Halbzeugs flach aufeinander. Dabei trägt diese Bauform der Erkenntnis Rechnung, dass eine Hohlprofilschaufel genau dann eine strömungstechnisch ideale Form aufweist, wenn ihre Hinterkante möglichst dünn ausgeführt ist. Mit anderen Worten ist es für eine strömungstechnische ideale Form einer Hohlprofilschaufel erforderlich, eine Hinterkante mit möglichst geringer Wandstärke zu realisieren. In dem offenbarten Beispiel beträgt die Wandstärke der Hinterkante ungefähr das Doppelte der Wandstärke des verwendeten Halbzeugs. Die beiden Enden des Halbzeugs können mit bekannten Methoden wie beispielsweise Schweißen oder Hartlöten miteinander verbunden werden.

Weiterhin weist das offenbarte Schaufelprofil einen stetigen Verlauf der Oberflächenkontur auf. Gemäß der im Stand der Technik bekannten Meinung wirken Vorsprünge, Absätze oder dergleichen in der Schaufelgeometrie einem günstigen Strömungsverlauf entgegen.

Ein strömungstechnisch günstiger Verlauf liegt vor, wenn das strömende Medium an der angrenzenden Fläche der Schaufeln möglichst in der Weise vorbei strömt, dass seine Geschwindigkeitsvektoren möglichst parallel zur Schaufeloberfläche ausgerichtet sind. In der Regel sind Strömungsablösungen, Verwirbelungen oder dergleichen unerwünscht, da sie Verluste in der Strömung verursachen können. Diese von einem günstigen Strömungsverlauf abweichenden Strömungssituationen reduzieren den Wirkungsgrad, verschlechtern das akustische Verhalten und können zu unstetigen Kennlinienverläufen führen.

Aufgabe der Erfindung ist es, eine Hohlprofilschaufel für ein Lüfterrad anzugeben, die den Wirkungsgrad und das Geräuschverhalten bekannter Hohlprofilschaufeln optimiert. Weiterhin ist es Aufgabe der Erfindung, ein Lüfterrad für einen Radiallüfter anzugeben, das einen gegenüber bekannten Lüfterrädern verbesserten Wirkungsgrad sowie ein verbessertes Geräuschverhalten aufweist.

Erfindungsgemäß wird diese Aufgabe durch eine Hohlprofilschaufel mit den Merkmalen des unabhängigen Anspruches 1 gelöst. Vorteilhafte Weiterbildungen der Hohlprofilschaufel ergeben sich aus den Unteransprüchen 2 bis 22. Die Aufgabe wird ferner durch ein Lüfterrad nach Anspruch 23 und 24 gelöst.

Eine erfindungsgemäße Hohlprofilschaufel für ein Lüfterrad ist aus mindestens einem ersten flächigen Halbzeug hergestellt und weist eine Vorderkante und eine Hinterkante sowie eine Druckseite und eine Saugseite auf, wobei die Druckseite einen ersten Teil des ersten flächigen Halbzeugs und die Saugseite einen zweiten Teil des ersten flächigen Halbzeugs aufweist. Im Inneren der Hohlprofilschaufel ist ein hohler Bereich ausgebildet, wobei die Hohlprofilschaufel in einem Bereich, der vor der Hinterkante angeordnet ist und unmittelbar an die Hinterkante angrenzt, eine Wandstärke aufweist, die kleiner ist als die doppelte Wandstärke des ersten flächigen Halbzeugs. Durch diese Bauform wird eine Schaufel mit einer endseitigen Hinterkante mit einer sehr dünnen Geometrie realisiert, wodurch die Hohlprofilschaufel strömungstechnisch optimiert wird. Weiterhin ist m Bereich der Hinterkante der Hohlprofilschaufel das erste Teil des ersten flächigen Halbzeugs um ungefähr 180° umgebogen und nach innen in den hohlen Bereich der Hohlprofilschaufel hinein geführt. Das nach innen in den hohlen Bereich der Hohlprofilschaufel hinein geführte erste Teil des ersten flächigen Halbzeugs wirkt dabei die Hohlprofilschaufel verstärkend, wodurch die im Betrieb der Schaufel möglichen Verformungen gerade des Bereichs der Hinterkante der Schaufel minimiert werden. Alternativ kann auch das zweite Teil des ersten flächigen Halbzeugs um ungefähr 180° umgebogen und nach innen in den hohlen Bereich der Hohlprofilschaufel hinein geführt sein, wobei der Effekt der gleich ist.

In einer bevorzugten Ausführungsform weist die Hohlprofilschaufel in dem Bereich, der vor der Hinterkante angeordnet ist und unmittelbar an die Hinterkante angrenzt, eine Wandstärke auf, die im Wesentlichen der einfachen Wandstärke des ersten flächigen Halbzeugs entspricht.

Dabei kann in einer Ausführungsform das erste Teil des ersten flächigen Halbzeugs über das zweite Teil des flächigen Halbzeugs im Bereich, der vor der Hinterkante angeordnet ist und unmittelbar an die Hinterkante angrenzt, hinaus ragen. Beispielsweise kann in einer ersten Ausführungsform die Druckseite der Hohlprofilschaufel von dem ersten Teil des ersten flächigen Halbzeugs der Hohlprofilschaufel gebildet werden, während die Saugseite von dem zweiten Teils des ersten flächigen Halbzeugs der Hohlprofilschaufel gebildet wird, wobei der erste Teil des ersten flächigen Halbzeugs im Bereich der Hinterkante der Schaufel über das zweite Teil des flächigen Halbzeugs hinaus ragt. In einer alternativen Ausführungsform kann das zweite Teil des ersten flächigen Halbzeugs im Bereich der Hinterkante der Schaufel über das erste Teil des flächigen Halbzeugs hinaus ragen.

Üblicherweise besteht das flächige Halbzeug aus einem Blech, beispielsweise aus einem metallischen Werkstoff. Das Umbiegen des Blechs kann beispielsweise auf einer Kantbank erfolgen.

In einer vorteilhaften Ausführungsform ist das erste Teil des ersten flächigen Halbzeugs der Hohlprofilschaufel mit dem zweiten Teil des ersten flächigen Halbzeugs stoffschlüssig verbunden. Diese Verbindung kann beispielsweise aus einer Schweißnaht oder auch aus einzelnen Schweißpunkten bestehen. Die Verbindungsstelle liegt vorteilhafterweise in einem Bereich in der Nähe der Hinterkante der Schaufel, beabstandet von der Vorderkante der Hohlprofilschaufel.

In einer weiteren besonders vorteilhaften Ausführungsform bildet die Umbiegestelle des ersten Teils des ersten flächigen Halbzeugs auf dem zweiten Teil des ersten flächigen Halbzeuges einen Dickensprung in dem Profil der Hohlprofilschaufel. Die Erfindung erkennt, dass entgegen dem Stand der Technik, der für eine anliegende, verlustarme Schaufelströmung einen stetigen Konturenverlauf fordert, unter gewissen Voraussetzungen abgewichen werden kann. Wenn gewisse geometrische Verhältnisse eingehalten werden, wird trotz eines unstetigen Schaufelverlaufes an der Abkantungsstelle eine weitgehend anliegende Schaufelströmung erreicht.

In einer weiteren bevorzugten Ausführungsform ist das erste Teil des ersten flächigen Halbzeugs der Hohlprofilschaufel mit dem zweiten Teil des ersten flächigen Halbzeugs mit einer Kehlnaht verschweißt. Die Schweißnaht hat überraschenderweise nur geringe Auswirkung auf die Strömung des Mediums. In diesem Bereich bildet sich ein kleiner Strömungswirbel aus, der den Dickensprung der Hohlprofilschaufel an dieser Stelle aus Sicht des strömenden Mediums quasi egalisiert und dadurch eine anliegende Strömung unterstützt. Andere Nahtformen oder auch Punktschweißungen sind ebenfalls möglich, unterstützen die Ausbildung einer anliegenden Strömung an dieser Stelle allerdings weniger optimal.

Es hat sich als vorteilhaft erweisen, wenn die Länge, um die der zweite Teil des ersten flächigen Halbzeugs der Hohlprofilschaufel über die Umbiegestelle des ersten Teils des ersten flächigen Halbzeugs hinausragt, genau so lang bis 100 mal so lang ist wie die Größe des Dickensprungs. Mit anderen Worten ist es vorteilhaft, wenn das Verhältnis der Größe des Dickensprungs zu der Länge, um die das zweite Teil des ersten flächigen Halbzeugs der Hohlprofilschaufel über die Umbiegestelle des erstens Teils des ersten flächigen Halbzeugs hinausragt, im Bereich von 1:1 bis 1:100 liegt. Dabei hat sich es sich als besonders vorteilhaft erwiesen, wenn dieses Verhältnis im Bereich von 1:2 bis 1:20 liegt. Bei einem solchen Größenverhältnis ist der sich ausbildende Strömungswirbel an dem Dickensprung besonders geeignet, die strömungstechnischen Auswirkungen des Dickensprungs zu minimieren.

In einer vorteilhaften Ausführungsform ist im Innenbereich der Hohlprofilschaufel ein Versteifungsprofil angeordnet. Im Betrieb der Schaufel stellen sich beispielsweise durch den Druckunterschied des Strömungsmediums zwischen Druck- und Saugseite und durch Fliehkräfte Verformungen ein, die sich üblicherweise im elastischen Bereich des Werkstoffs bewegen. Durch die Verformungen kann sich das Schaufelprofil ändern und dadurch der Wirkungsgrad beeinträchtigt werden. Darüber hinaus kann eine solche Verformung auch Einfluss auf die Schallemission haben. Durch das Versteifungsprofil wird diese mögliche Verformung reduziert und somit der Wirkungsgrad und die Geräuschemission im Betrieb optimiert. Die entstehenden mechanischen Spannungen und Verformungen begrenzen zudem den zulässigen Drehzahlbereich.

In einer weiteren vorteilhaften Ausführungsform ist das Versteifungsprofil aus dem umgebogenen Teil des ersten Teils des ersten flächigen Halbzeugs ausgebildet. Diese Ausführungsform ist dabei besonders einfach herstellbar, wobei der Vorteil besonders groß ist, wenn das Versteifungsprofil durch Kanten herstellbar ist.

Es hat sich weiterhin als vorteilhaft herausgestellt, wenn im Innenbereich der Hohlprofilschaufel im Bereich der Hinterkante ein Teil des ersten flächigen Halbzeugs flach auf einer Seite der Hohlprofilschaufel aufliegt. Dabei umfasst der Bereich der Hinterkante nicht nur den unmittelbar an der Hinterkante der Schaufel liegenden Teil, sondern einen Bereich ab circa der Mitte zwischen Vorderkante und Hinterkante bis zur Hinterkante selbst.

In einer vorteilhaften Ausführungsform liegt das im Innenbereich der Hohlprofilschaufel im Bereich der Hinterkante aufliegende Teil des ersten flächigen Halbzeugs flach auf der Saugseite der Hohlprofilschaufel auf, wobei der Bereich der Hinterkante wie vor beschrieben definiert ist. Diese Bauform ist besonders einfach herstellbar und führt zu einer hinsichtlich der Verwindungssteifigkeit optimierten Hohlprofilschaufel. Diese Ausgestaltung führt dazu, dass die Hohlprofilschaufel in dem entsprechenden Bereich die dreifache Wandstärke des zur Herstellung benutzten flächigen Halbzeugs aufweist, während der Bereich der Hinterkante, der über den Umbiegebereich des ersten Teils des ersten flächigen Halbzeugs hinausragt, nur aus einer Lage des ersten flächigen Halbzeugs besteht und somit nur die einfache Wandstärke des verwendeten ersten flächigen Halbzeugs aufweist.

In einer weiteren vorteilhaften Ausführungsform ist die Hohlprofilschaufel aus genau einem ersten flächigen Halbzeug hergestellt, wodurch die Herstellung besonders wirtschaftlich möglich ist.

In einer alternativen Ausführungsform ist in dem Bereich, der vor der Hinterkante angeordnet ist und unmittelbar an die Hinterkante angrenzt, ein zweites flächiges Halbzeug angeordnet. Dabei ragt dieses zweite flächige Halbzeug in Richtung der Hinterkante der Hohlprofilschaufel über das erste flächige Halbzeug hinaus. Die Wandstärke des zweiten flächigen Halbzeugs ist kleiner als die doppelte Wandstärke des ersten flächigen Halbzeugs. Dabei wird auch in dieser Ausführungsform in dem Bereich, der vor der Hinterkante angeordnet ist und unmittelbar an die Hinterkante angrenzt, eine Wandstärke der Hohlprofilschaufel geschaffen, die kleiner ist als die doppelte Wandstärke des ersten flächigen Halbzeugs. Insbesondere ist die Wandstärke der Hohlprofilschaufel in dem Bereich, der vor der Hinterkante angeordnet ist und unmittelbar an die Hinterkante angrenzt, gleich der einfachen Wandstärke des zweiten flächigen Halbzeugs. Dieses zweite flächige Halbzeug kann beispielsweise wie das erste flächige Halbzeug ein Blech aus einem metallischen Werkstoff bestehen. Damit wird auch durch diese alternative Bauform eine Schaufel mit einer endseitigen Hinterkante mit einer sehr dünnen Geometrie realisiert, wodurch die Hohlprofilschaufel strömungstechnisch optimiert wird.

In einer vorteilhaften Ausführungsform ragt dabei das zweite flächige Halbzeug in den Innenbereich der Hohlprofilschaufel hinein. Dadurch lässt sich das zweite flächige Halbzeug besonders leicht und stabil an der Hohlprofilschaufel befestigen. Dazu ist das zweite flächige Halbzeug in einer weiteren vorteilhaften Ausführungsform mit dem ersten Teil des ersten flächigen Halbzeugs der Hohlprofilschaufel und/oder mit dem zweiten Teil des ersten flächigen Halbzeugs stoffschlüssig verbunden. Es hat sich als vorteilhaft herausgestellt, wenn diese stoffschlüssige Verbindung durch Verschweißung, insbesondere mit einer Kehlnaht, erfolgt.

Auch in der alternativen Ausführungsform ist es vorteilhaft, wenn im Innenbereich der Hohlprofilschaufel ein Versteifungsprofil angeordnet ist. Besonders vorteilhaft ist es, wenn das Versteifungsprofil aus dem zweiten des flächigen Halbzeugs ausgebildet ist.

In einer vorteilhaften Ausführungsform ist das Versteifungsprofil durch Kanten des zweiten flächigen Halbzeugs hergestellt.

Ein erfindungsgemäßes Lüfterrad für einen Radiallüfter weist eine Deckscheibe und eine Bodenscheibe auf und ist dadurch gekennzeichnet, dass es mehrere Hohlprofilschaufeln zwischen der Deckscheibe und der Bodenscheibe aufweist. Die Hohlprofilschaufeln entsprechen dabei einer der vorbeschriebenen Ausführungsformen.

In einer vorteilhaften Ausführungsform des erfindungsgemäßen Lüfterrades weisen die Hohlprofilschaufeln Laschen an einer ihrer oberen und/oder unteren Schmalseite auf, während die Deckscheibe und/oder die Bodenscheibe Durchbrüche aufweisen, in die die Nasen zur Halterung der Hohlprofilschaufeln zwischen Deckscheibe und Bodenscheibe eintauchbar sind, wodurch eine besonders einfache Montage der Hohlprofilschaufeln in dem Lüfterrad realisierbar ist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Hohlprofilschaufel nach dem Stand der Technik in einer dreidimensionalen Darstellung
- Fig. 2: Schematisches Strömungsbild an der Hinterkante einer Hohlprofilschaufel nach dem Stand der Technik
- Fig. 3: Dreidimensionale Darstellung einer erfindungsgemäßen Hohlprofilschaufel
- Fig. 4: Dreidimensionale Darstellung einer alternativen Ausführungsform einer erfindungsgemäßen Hohlprofilschaufel
- Fig. 5: Dreidimensionale Darstellung einer weiteren alternativen Ausführungsform einer erfindungsgemäßen Hohlprofilschaufel
- Fig. 6: Schnittdarstellung der alternativen Ausführungsform aus Fig. 5
- Fig. 7: Dreidimensionale Darstellung einer weiteren Ausführungsform einer erfindungsgemäßen Hohlprofilschaufel mit innenliegendem Versteifungsprofil
- Fig. 8: Schnittdarstellung der in Fig. 4 gezeigten Ausführungsform einer erfindungsgemäßen Hohlprofilschaufel mit innenliegendem Versteifungsprofil
- Fig. 9: Detaildarstellung der Hinterkante einer erfindungsgemäßen Hohlprofilschaufel in einer Schnittdarstellung
- Fig. 10: Schematisches Strömungsbild einer erfindungsgemäßen Hohlprofilschaufel
- Fig. 11: Detaildarstellung eines schematischen Strömungsbilds an der Hinterkante einer erfindungsgemäßen Hohlprofilschaufel
- Fig. 12: Dreidimensionale Darstellung eines erfindungsgemäßen Lüfterrades

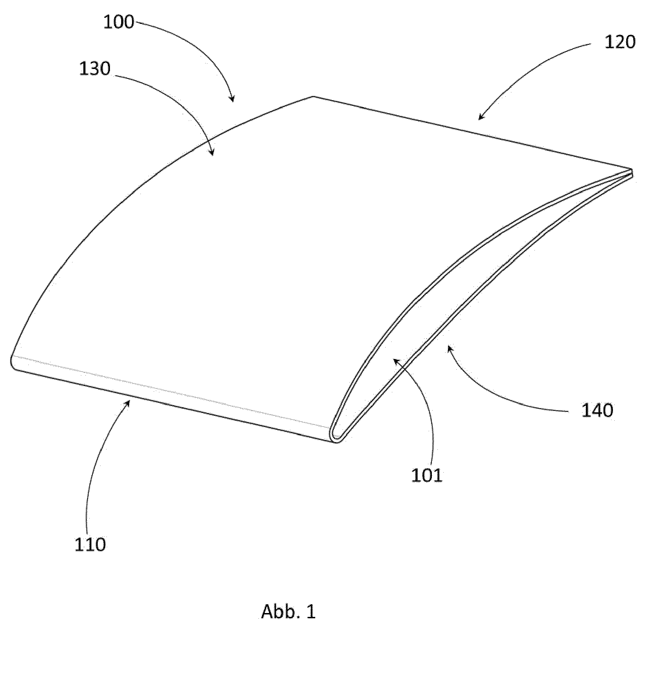

Fig. 1 zeigt eine Hohlprofilschaufel 100 nach dem Stand der Technik in einer dreidimensionalen Darstellung. Die Hohlprofilschaufel 100 ist aus einem ersten Blech als flächigen Halbzeug 105 hergestellt und weist eine Druckseite 130, eine Saugseite 140, eine Vorderkante 110 und eine Hinterkante 120 auf. Zwischen der Druckseite 130 und der Saugseite 140 wird ein hohler Innenbereich 101 gebildet. Das Blech 105 ist so gekantet, dass die Vorderkante 110 eine Dicke aufweist, die größer als die doppelte Wandstärke des Blechs 105 ist. An der Hinterkante 120 hingegen kommen die Blechenden aufeinander zu liegen, so dass die Hinterkante 120 eine Dicke in der Größe der doppelten Wandstärke des verwendeten Blechs 105 aufweist.

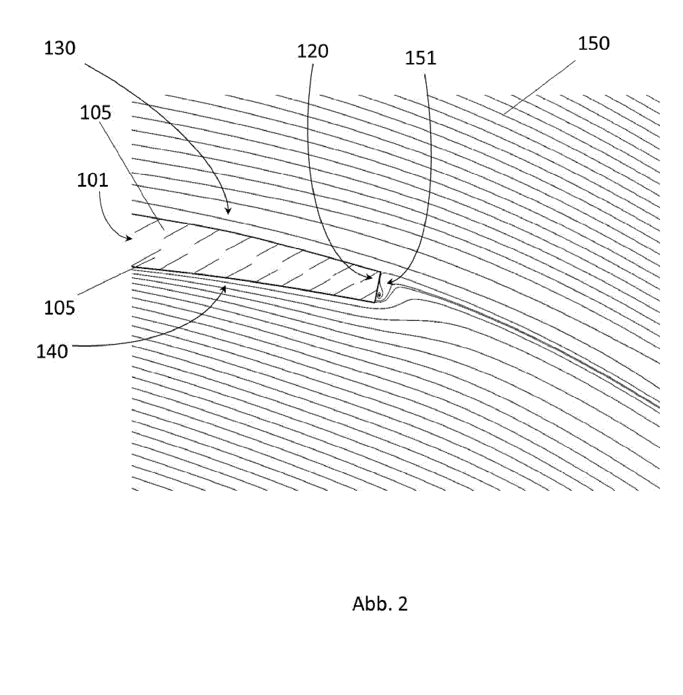

Fig. 2 zeigt ein schematisches Strömungsbild an der Hinterkante 120 einer Hohlprofilschaufel 100 nach dem Stand der Technik. Die Hohlprofilschaufel 100 ist aus Blech aufgebaut. Das die Druckseite 130 und das die Saugseite 140 ausbildende Blech 105 treffen an der Hinterkante 120 aufeinander. In dem Bereich vor der Hinterkante ist ein hohler Bereich 101 ausgebildet. Weiterhin sind Strömungslinien 150 eines die Hohlprofilschaufel 100 umströmenden Mediums, beispielsweise Luft, zu erkennen. Das Medium umströmt die Hohlprofilschaufel 100 weitestgehend anliegend. Weiterhin ist an der Hinterkante 120 der Hohlprofilschaufel 100 eine Verwirbelung 151 zu erkennen, die durch die abrupte Abrisskante in Form der aufeinanderliegenden Bleche 105 mit einer Dicke in Höhe der doppelten Blechstärke erzeugt wird. Diese Verwirbelung führt zu einer Wirkungsgradverschlechterung der Hohlprofilschaufel 100. Darüber hinaus können durch die Verwirbelung unerwünschte akustische Effekte entstehen.

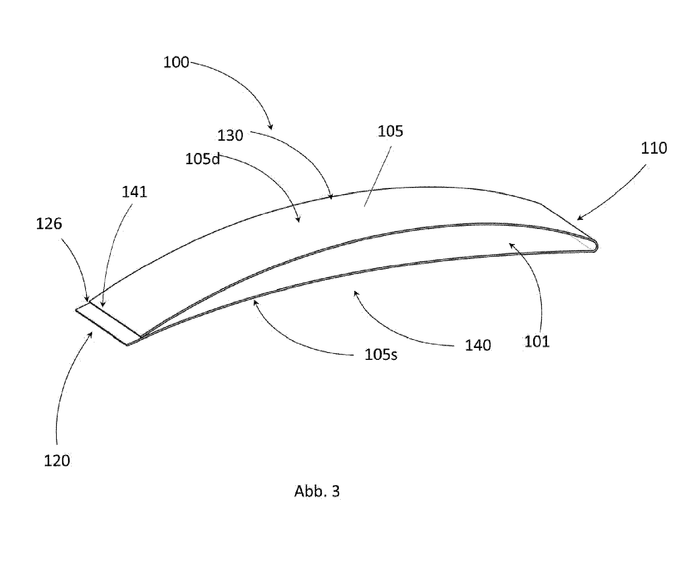

In Fig. 3 ist eine dreidimensionale Darstellung einer erfindungsgemäßen Hohlprofilschaufel 100 zu sehen. Die Hohlprofilschaufel 100 ist aus einem Blech als erstem flächigem Halbzeug 105 hergestellt und weist eine Druckseite 130, eine Saugseite 140, eine Vorderkante 110 und eine Hinterkante 120 auf. Zwischen der Druckseite 130 und der Saugseite 140 wird ein hohler Innenbereich 101 gebildet. Das Blech 105 ist so gekantet, dass die Vorderkante 110 eine Dicke aufweist, die größer als die doppelte Wandstärke des Blechs 105 ist. In einem Bereich 126, der vor der Hinterkante 120 angeordnet ist und unmittelbar an die Hinterkante 120 angrenzt, kommen die Blechenden aufeinander zu liegen. Die Druckseite 130 der Hohlprofilsschaufel 100 weist einen ersten Teil 105d des ersten flächigen Halbzeugs 105 und die Saugseite 140 der Hohlprofilsschaufel 100 weist einen zweiten Teil 105s des ersten flächigen Halbzeugs 105 auf. Dabei ragt der zweite Teil 105s des ersten flächigen Halbzeugs 105 im Bereich 126 über den ersten Teil 105d des ersten flächigen Halbzeugs 105 hinaus, so dass die Hinterkante 120 selbst eine einfache Blechdicke als Dicke aufweist. Dabei weist die Saugseite 130 an der Stelle, an der der erste Teil 105d des ersten flächigen Halbzeugs 105 auf den zweiten Teil 105s des ersten flächigen Halbzeugs 105 trifft, einen Dickensprung 141 auf.

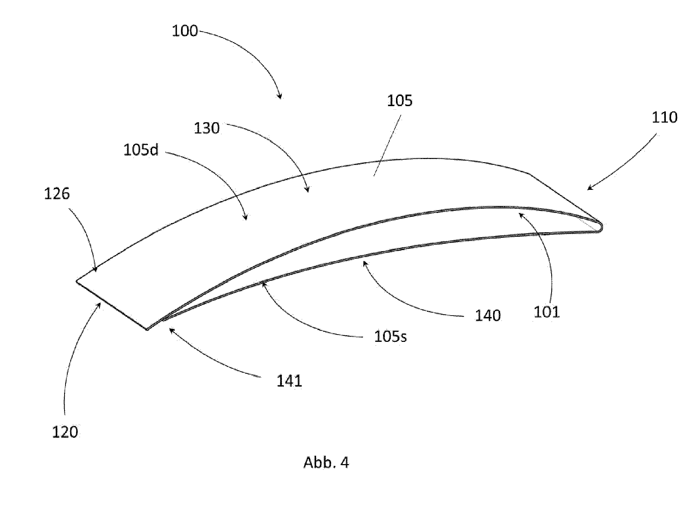

Fig. 4 zeigt die dreidimensionale Darstellung einer alternativen Ausführungsform einer erfindungsgemäßen Hohlprofilschaufel 100. Im Unterschied zu der in Fig. 3 gezeigten Ausführungsform ragt der erste Teil 105d des ersten flächigen Halbzeugs 105 im Bereich 126 über den zweiten Teil 105s des ersten flächigen Halbzeugs 105 hinaus. Auch in dieser Ausführungsform weist die Hinterkante 120 selbst eine einfache Blechdicke auf. Dabei weist die Druckseite 140 an der Stelle, an der der zweite Teil 105s des ersten flächigen Halbzeugs 105 auf den ersten Teil 105d des ersten flächigen Halbzeugs 105 trifft, einen Dickensprung 141 auf.

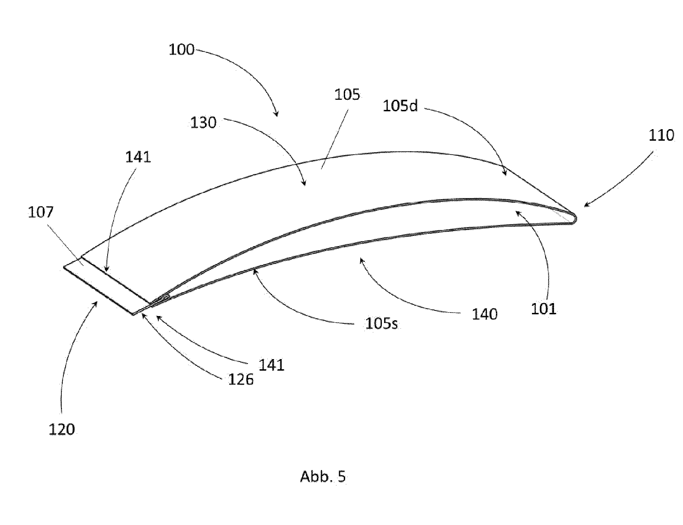

Fig. 5 ist die dreidimensionale Darstellung einer weiteren alternativen Ausführungsform einer erfindungsgemäßen Hohlprofilschaufel 100. In dieser Ausführungsform weist die Druckseite 130 einen ersten Teil 105d des ersten flächigen Halbzeugs 105 auf, während die Saugseite 140 einen zweiten Teil 105s des ersten flächigen Halbzeugs 105 aufweist. In dem vor der Hinterkante 120 angeordneten und unmittelbar an die Hinterkante 120 angrenzenden Bereich 126 ist ein zweites flächiges Halbzeug 107 vorgesehen, das in den Innenbereich 101 der Hohlprofilschaufel 100 hinein ragt und sowohl über den ersten Teil 105d, als auch den zweiten Teil 105s der ersten flächigen Halbzeugs 105 in Richtung der Hinterkante 120 hinaus ragt. Die Wandstärke des zweiten flächigen Halbzeugs 107 ist kleiner als die doppelte Wandstärke des ersten flächigen Halbzeugs 105. Beispielsweise weist die Wandstärke des zweiten flächigen Halbzeugs 107 im Wesentlichen die gleiche Wandstärke wie das erste flächige Halbzeug 105 auf. Dabei wird auch in dieser Ausführungsform in dem Bereich 126 eine Wandstärke der Hohlprofilschaufel 100 geschaffen, die kleiner ist als die doppelte Wandstärke des ersten flächigen Halbzeugs 105. Damit wird auch durch diese alternative Bauform eine Hohlprofilschaufel 105 mit einer endseitigen Hinterkante 120 mit einer sehr dünnen Geometrie realisiert, wodurch die Hohlprofilschaufel 100 strömungstechnisch optimiert wird.

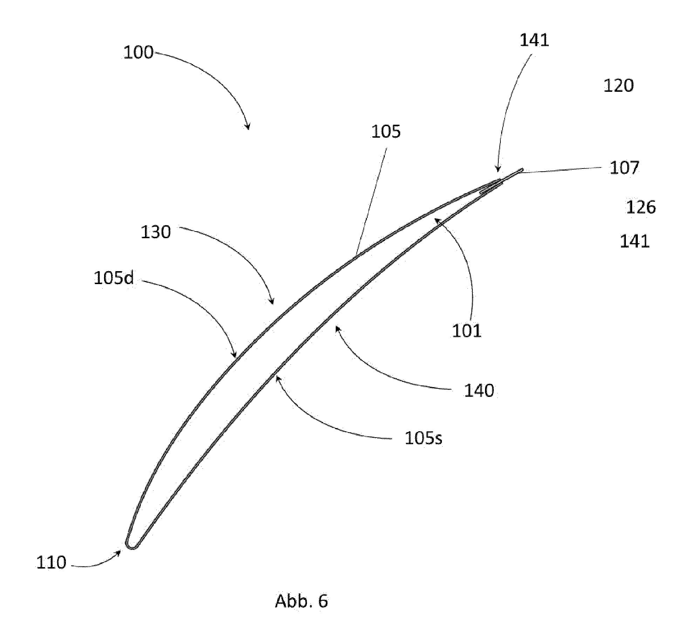

Fig. 6 ist eine Schnittdarstellung der alternativen Ausführungsform aus Fig. 5. Das zweite flächige Halbzeug 107 ist zwischen dem ersten Teil 105d und dem zweiten Teil 105s der ersten flächigen Halbzeugs 105 bis in den Innenbereich 101 der Hohlprofilschaufel 100 eingeführt und sowohl mit dem ersten Teil 105d als auch dem zweiten Teil 105s der ersten flächigen Halbzeugs 105 verschweißt.

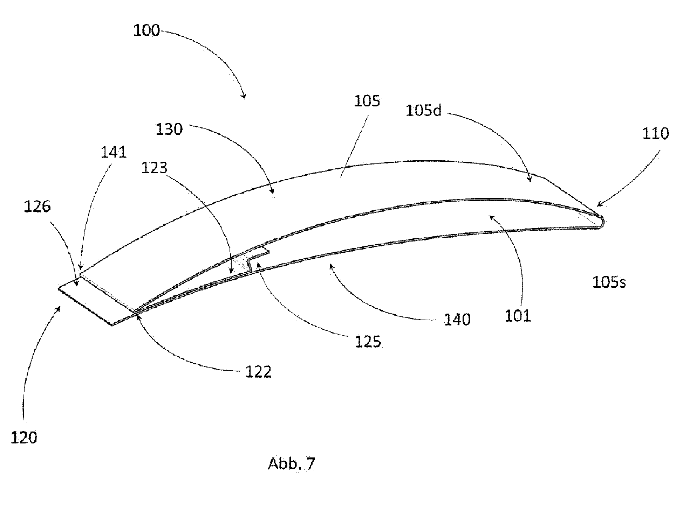

Fig. 7 zeigt eine weitere Ausführungsform einer erfindungsgemäßen Hohlprofilschaufel 100 mit einem innen liegendem Versteifungsprofil 125 in einer dreidimensionalen Darstellung. Der erste Teil 105d des ersten flächigen Halbzeugs 105 ist dort, wo er im vor der Hinterkante 120 angeordneten und unmittelbar an die Hinterkante 120 angrenzenden Bereich 126 auf den zweiten Teil 105s des ersten flächigen Halbzeugs 105 trifft, um circa 180° umgebogen und auf der Innenseite zweiten Teils 105s des ersten flächigen Halbzeugs 105 aufliegend in den Innenbereich 101 der Hohlprofilschaufel 100 zurückgeführt. An seinem Ende weiter in dem hohlen Bereich 101 ist dieser erste Teil 105d des ersten flächigen Halbzeugs 105 aufgekantet und bildet so ein Versteifungsprofil 125. Durch die Zurückführung des ersten Teils 105d des ersten flächigen Halbzeugs 105 weist die Hohlprofilschaufel in einem Bereich 123 von der Umbiegestelle 122 bis zum Ende des zurückgeführten Blechs 105 die dreifache Dicke des Blechs 105 auf. Dadurch wird die Hohlprofilschaufel 100 in diesem Bereich 123 verstärkt und kann daher den im Betrieb auftretenden Verformungskräften besser standhalten. Das Versteifungsprofil 125 trägt weiter zur Stabilisierung der Hohlprofilschaufel 100 bei.

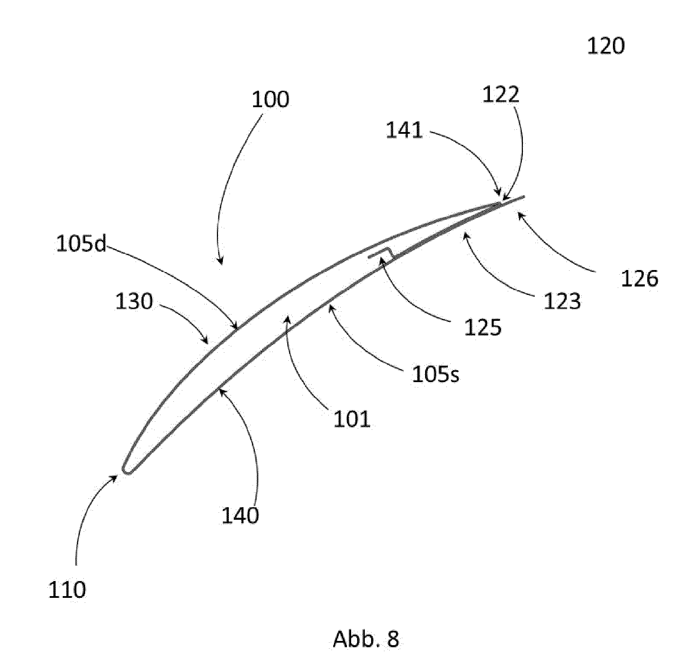

Fig. 8 ist eine Schnittdarstellung der in Fig. 4 gezeigten Ausführungsform einer erfindungsgemäßen Hohlprofilschaufel 100 mit innenliegendem Versteifungsprofil 125. In dieser Darstellung ist der Bereich 123, in dem er erste Teil 105d des ersten flächigen Halbzeugs 105 auf dem zweiten Teil 105s des ersten flächigen Halbzeugs 105 aufliegend in den Innenbereich 101 zurückgeführt ist, deutlicher zu erkennen. Das Versteifungsprofil 125 kann wie in Figur 7 gezeigt ausgeführt sein. Andere, einem Biege- oder Verwindungsmoment ein Widerstandsmoment entgegensetzen könnende Geometrien sind aber ebenfalls denkbar.

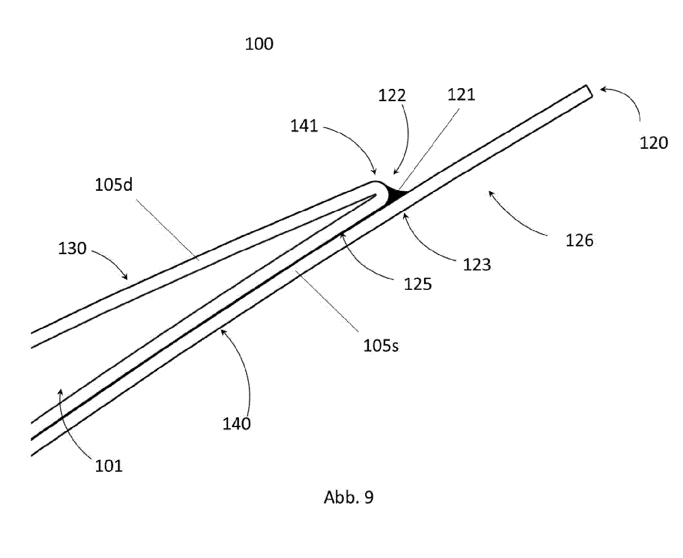

In Fig. 9 ist die Hinterkante 120 einer erfindungsgemäßen Hohlprofilschaufel 100 vergrößert dargestellt. Der erste Teil 105d des ersten flächigen Halbzeugs 105 ist an der Umbiegestelle 122 um circa 180° umgebogen und auf dem zweiten Teil 105s des ersten flächigen Halbzeugs 105 aufliegend in den Innenbereich 101 der Hohlprofilschaufel 100 zurückgeführt, wobei der zweite Teil 105s des ersten flächigen Halbzeugs 105 über die Umbiegestelle 122 hinaus in Richtung der Hinterkante 120 weitergeführt ist. An der Umbiegestelle 122 sind die Teile 105d, 105s des ersten flächigen Halbzeugs 105 mit einer Kehlnaht 121 stoffschlüssig miteinander verschweißt.

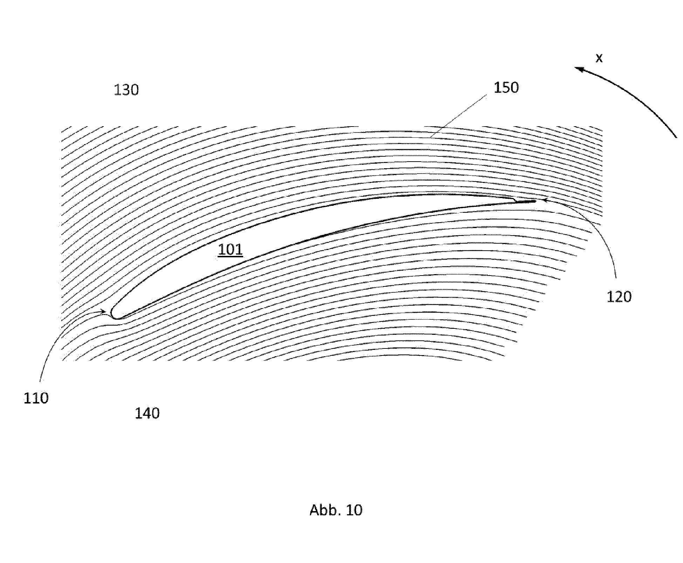

Fig. 10 zeigt ein schematisches Strömungsbild einer erfindungsgemäßen Hohlprofilschaufel 100. Bei der Rotation der Schaufel in x-Richtung bildet sich das gezeigte anliegende Strömungsbild aus.

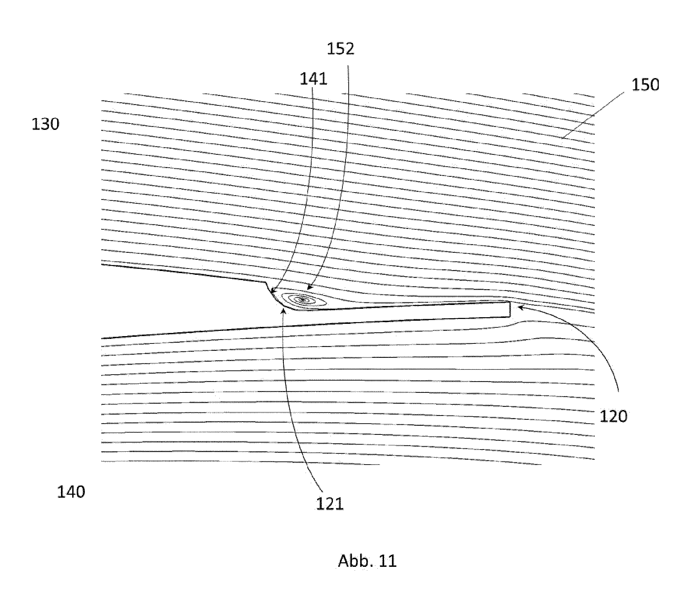

In Fig. 11 ist das sich ausbildende Strömungsbild an der Hinterkante 120 einer erfindungsgemäßen Hohlprofilschaufel 100 vergrößert schematisch dargestellt. Im Bereich der Kehlnaht 121 bildet sich ein kleiner Strömungswirbel 152 aus, der den Dickensprung 141 der Hohlprofilschaufel 100 an dieser Stelle aus Sicht des strömenden Mediums quasi egalisiert und dadurch eine anliegende, verlustarme Strömung unterstützt.

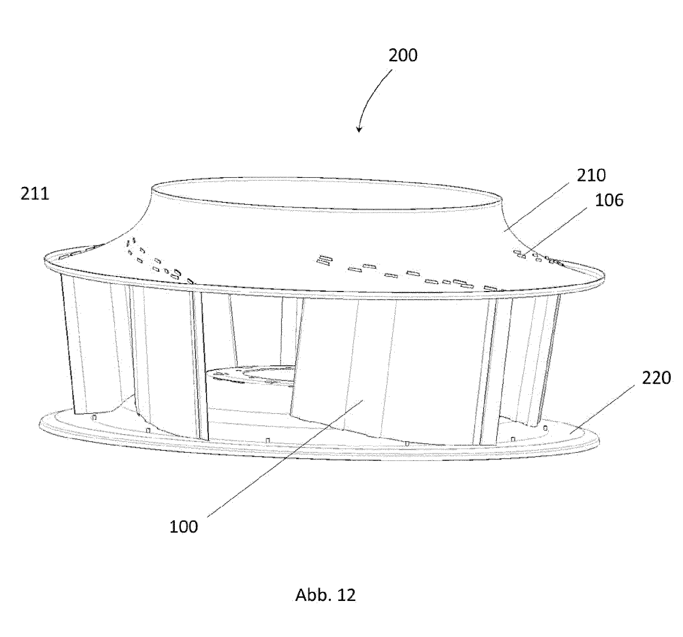

Fig. 12 ist die dreidimensionale Darstellung eines erfindungsgemäßen Lüfterrades 200. Das Lüfterrad 200 weist eine Deckscheibe 210 und eine Bodenscheibe 220 auf. Zwischen Bodenscheibe 220 und Deckscheibe 210 sind Hohlprofilschaufeln 100 angeordnet. Die Hohlprofilschaufeln 100 können mit Nasen 106, die in Durchbrüche 211 in die Deckscheibe 210 und weiteren Nasen, die in Durchbrüche in die Bodenscheibe (in der Figur nicht gezeigt) eintauchen, in dem Lüfterrad 200 montiert werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 100: Hohlprofilschaufel
- 101: Hohler Bereich, Innenbereich
- 105: flächiges Halbzeug, Blech
- 105d: erstes, druckseitig angeordnetes Teil des ersten flächigen Halbzeugs
- 105s: zweites, saugseitig angeordnetes Teil des ersten flächigen Halbzeugs
- 106: Nase
- 107: zweites flächiges Halbzeug, Blech
- 110: Vorderkante
- 120: Hinterkante
- 121: Kehlnaht
- 122: Umbiegestelle
- 123: Bereich des zurückgeführten flächigen Halbzeugs
- 125: Versteifungsprofil
- 126: Bereich
- 130: Druckseite
- 140: Saugseite
- 141: Dickensprung
- 150: Strömungslinie
- 151: Verwirbelung
- 152: Strömungswirbel
- 200: Lüfterrad
- 210: Deckscheibe
- 211: Durchbruch
- 220: Bodenscheibe
- x: Drehrichtung

## Patentansprüche

1. Hohlprofilschaufel (100) für ein Lüfterrad (200), wobei die Hohlprofilsschaufel (100) aus mindestens einem ersten flächigen Halbzeug (105) hergestellt ist und eine Vorderkante (110) und eine Hinterkante (120) sowie eine Druckseite (130) und eine Saugseite (140) aufweist und wobei im Inneren der Hohlprofilschaufel (100) ein hohler Bereich (101) ausgebildet ist, wobei die Druckseite (130) einen ersten Teil (105d) des ersten flächigen Halbzeugs (105) und die Saugseite (140) einen zweiten (105s) Teil des ersten flächigen Halbzeugs (105) aufweist,
**dadurch gekennzeichnet,**
**dass** die Hohlprofilschaufel (100) in einem Bereich (126), der vor der Hinterkante (120) angeordnet ist und unmittelbar an die Hinterkante (120) angrenzt, eine Wandstärke aufweist, die kleiner ist als die doppelte Wandstärke des ersten flächigen Halbzeugs (105)..

2. Hohlprofilschaufel (100) gemäß Anspruch 1,
**dadurch gekennzeichnet,**
**dass** die Hohlprofilschaufel (100) in dem Bereich (126) eine Wandstärke aufweist, die im Wesentlichen der einfachen Wandstärke des ersten flächigen Halbzeugs (105) entspricht.

3. Hohlprofilschaufel (100) gemäß einem der Ansprüche 1 und 2,
**dadurch gekennzeichnet,**
**dass** das erste Teil (105d) des ersten flächigen Halbzeugs (105) über das zweite Teil (105s) des flächigen Halbzeugs (105) im Bereich (126) hinaus ragt.

4. Hohlprofilschaufel (100) gemäß einem der Ansprüche 1 und 2,
**dadurch gekennzeichnet,**
**dass** das zweite Teil (105s) des ersten flächigen Halbzeugs (105) über das erste Teil (105d) des flächigen Halbzeugs (105) im Bereich (126) hinaus ragt.

5. Hohlprofilschaufel (100) gemäß einem der vorherigen Ansprüche,
**dadurch gekennzeichnet,**
**dass** das erste Teil (105d) des flächigen Halbzeugs (105) der Hohlprofilschaufel (100) mit dem zweiten Teil (105s) des ersten flächigen Halbzeugs (105) stoffschlüssig verbunden ist.

6. Hohlprofilschaufel (100) gemäß einem der Ansprüche 4 und 5,
**dadurch gekennzeichnet,**
**dass** die Umbiegestelle (122) des ersten Teils (105d) des ersten flächigen Halbzeugs (105) auf dem zweiten Teil (105s) des ersten flächigen Halbzeuges einen Dickensprung (141) in dem Profil der Hohlprofilschaufel (100) bildet.

7. Hohlprofilschaufel (100) gemäß Anspruch 6,
**dadurch gekennzeichnet,**
**dass** das erste Teil (105d) des flächigen Halbzeugs (105) der Hohlprofilschaufel (100) mit dem zweiten Teil (105s) des ersten flächigen Halbzeugs (105) mit einer Kehlnaht (121) verschweißt ist.

8. Hohlprofilschaufel (100) gemäß einem der Ansprüche 6 und 7,
**dadurch gekennzeichnet,**
**dass** das Verhältnis der Größe des Dickensprungs (141) zur Länge, um die zweite Teil (105s) des ersten flächigen Halbzeugs (105) der Hohlprofilschaufel (100) über die Umbiegestelle (122) des ersten Teils (105d) des ersten flächigen Halbzeugs (105) hinausragt, im Bereich von 1:1 bis 1:100 liegt.

9. Hohlprofilschaufel (100) gemäß einem der Ansprüche 6 bis 8,
**dadurch gekennzeichnet,**
**dass** das Verhältnis der Größe des Dickensprungs (141) zur Länge, um die das zweite Teil (105s) des ersten flächigen Halbzeugs (105) der Hohlprofilschaufel (100) über die Umbiegestelle (122) des ersten Teils (105d) des ersten flächigen Halbzeugs (105) hinausragt, im Bereich von 1:2 bis 1:20 liegt.

10. Hohlprofilschaufel (100) gemäß einem der vorherigen Ansprüche,
**dadurch gekennzeichnet,**
**dass** im Innenbereich (101) der Hohlprofilschaufel (100) ein Versteifungsprofil (125) angeordnet ist.

11. Hohlprofilschaufel (100) gemäß Anspruch 10,
**dadurch gekennzeichnet,**
**dass** das Versteifungsprofil (125) aus dem umgebogenen Teil des ersten Teils (105d) des ersten flächigen Halbzeugs (105) ausgebildet ist.

12. Hohlprofilschaufel (100) gemäß einem der Ansprüche 10 und 11,
**dadurch gekennzeichnet,**
**dass** das Versteifungsprofil (125) durch Kanten herstellbar ist,

13. Hohlprofilschaufel (100) gemäß einem der vorherigen Ansprüche,
**dadurch gekennzeichnet,**
**dass** im Innenbereich (101) der Hohlprofilschaufel (100) im Bereich der Hinterkante (120) ein Teil des ersten flächigen Halbzeugs (105) flach auf einer Seite (130, 140) der Hohlprofilschaufel (100) aufliegt.

14. Hohlprofilschaufel (100) gemäß Anspruch 13,
**dadurch gekennzeichnet,**
**dass** das im Innenbereich (101) der Hohlprofilschaufel (100) im Bereich der Hinterkante (120) aufliegende Teil des ersten flächigen Halbzeugs (105) flach auf der Saugseite (140) der Hohlprofilschaufel (100) aufliegt.

15. Hohlprofilschaufel (100) gemäß einem der vorherigen Ansprüche,
**dadurch gekennzeichnet,**
**dass** die Hohlprofilschaufel (100) aus genau einem ersten flächigen Halbzeug (105) hergestellt ist,

16. Hohlprofilschaufel (100) gemäß einem der Ansprüche 1 und 2,
**dadurch gekennzeichnet,**
**dass** im Bereich (126) ein zweites flächiges Halbzeug (106) angeordnet ist, wobei dieses zweite flächige Halbzeug (106) in Richtung der Hinterkante (120) der Hohlprofilschaufel (100) über das erste flächige Halbzeug (105) hinaus ragt und wobei die Wandstärke des zweiten flächigen Halbzeugs (106) kleiner ist als die doppelte Wandstärke des ersten flächigen Halbzeugs (105).

17. Hohlprofilschaufel (100) gemäß Anspruch 16,
**dadurch gekennzeichnet,**
**dass** das zweite flächige Halbzeug (106) in den Innenbereich (101) der Hohlprofilschaufel (100) hinein ragt.

18. Hohlprofilschaufel (100) gemäß einem der Ansprüche 16 und 17,
**dadurch gekennzeichnet,**
**dass** das erste Teil (105d) des ersten flächigen Halbzeugs (105) der Hohlprofilschaufel (100) und/oder das zweite Teil (105s) des ersten flächigen Halbzeugs (105) mit dem zweiten flächigen Halbzeug (107) stoffschlüssig verbunden ist.

19. Hohlprofilschaufel (100) gemäß Anspruch 18,
**dadurch gekennzeichnet,**
**dass** das das erste Teil (105d) des ersten flächigen Halbzeugs (105) der Hohlprofilschaufel (100) und/oder das zweite Teil (105s) des ersten flächigen Halbzeugs (105) mit dem zweiten flächigen Halbzeug (107) mit einer Kehlnaht (121) verschweißt ist.

20. Hohlprofilschaufel (100) gemäß einem der Ansprüche 16 bis 19,
**dadurch gekennzeichnet,**
**dass** im Innenbereich (101) der Hohlprofilschaufel (100) ein Versteifungsprofil (125) angeordnet ist.

21. Hohlprofilschaufel (100) gemäß Anspruch 20,
**dadurch gekennzeichnet,**
**dass** das Versteifungsprofil (125) aus dem zweiten des flächigen Halbzeug (107) ausgebildet ist.

22. Hohlprofilschaufel (100) gemäß einem der Ansprüche 20 und 21,
**dadurch gekennzeichnet,**
**dass** das Versteifungsprofil (125) durch Kanten herstellbar ist.

23. Lüfterrad (200) für einen Radiallüfter mit einer Deckscheibe (210) und einer Bodenscheibe (220),
**dadurch gekennzeichnet,**
**dass** das Lüfterrad (200) mehrere Hohlprofilschaufeln (100) zwischen der Deckscheibe (210) und der Bodenscheibe (220) aufweist.

24. Lüfterrad (200) nach Anspruch 23,
**dadurch gekennzeichnet,**
**dass** die Hohlprofilschaufeln (100) Nasen (106) an einer ihren oberen und/oder unteren Schmalseite aufweisen, während die Deckscheibe (210) und/oder die Bodenscheibe (220) Durchbrüche (211) aufweisen, in die die Nasen (106) zur Halterung der Hohlprofilschaufeln (100) zwischen Deckscheibe (210) und Bodenscheibe (220) eintauchbar sind.
